# EUROPEAN PATENT APPLICATION

(11) **EP 1 251 104 A1**
(43) Date of publication of application: **23.10.2002**
(21) Application number: 01870082.3
(22) Date of filing: 18.04.2001
(51) Int. Cl.: C02F 3/28, C02F 11/18, C02F 103/32

(54) **A method for processing yeast-containing waste flows in an anaerobic reactor**

(71) Applicant: Seghers Better Technology for water, 3150 Wespelaar (BE)
(72) Inventor: Seghers, Hendrik, 1840 Malderen (BE)
(74) Representative: Luys, Marie-José A.H.

(57) **Abstract**

This invention relates to a method for processing a water based yeast containing waste stream, according to which process the yeast containing waste stream is subjected to a thermal treatment for at least 24 hours at a temperature of at least 40°C, after which the stream is purified in an anaerobic water purification reactor.

## Description

This invention relates to a method for processing yeast containing wastewater streams.

The production of beer and yeast is associated with the formation of important amounts of wastewater and yeast as side products. Before being dumped or further processed the wastewater stream is purified in a water purification reactor to allow restrictions imposed by environmental law to be met. The yeast waste stream may be further processed and incorporated in animal feed, in particular pig feed, which is an economically feasible product in a large number of countries. However in those countries where the yeast cannot be valorised as feed for other purposes, this yeast constitutes a waste product which needs to be dumped. Before dumping it, care needs to be taken that the yeast stream meets the standards imposed by law.

It is the aim of the present invention to provide a process for the purification of yeast containing waste streams, in particular wastewater based yeast containing waste streams.

This is achieved according to the present invention in that the yeast containing waste stream is subjected to a thermal treatment for at least 24 hours at a temperature of at least 35°C, preferably at least 40°C after which the processed stream is purified in an anaerobic water purification reactor with a sludge blanket.

Subjecting a water based yeast stream to a thermal treatment at a temperature above 35°C involves lysis of the yeast cells and dissolution of the content of the cells in the yeast-containing medium. A temperature above 40°C, in particular above 45°C is preferred as at this temperature lysis of the majority of the yeast cells may be obtained. The temperature will usually be maintained below 75°C or 60°C, as the use of higher temperature involves higher process costs without substantially improving the process.

The duration of the thermal pre-treatment is at least approximately 24 hours, preferably at least approximately 36 hours and maximum 60 hours, more preferred approximately 48 hours. The inventor has found that after a pre-treatment time of approximately 24 hours, the majority of the yeast cells has been killed. However, to ensure the lysis to be as complete as possible it is preferred to prolong the reaction time as outlined above.

The duration of the thermal treatment will usually be adapted to the temperature at which the thermal treatment is carried out to take account of the fact that the lysis reaction rate is temperature dependent. The inventor has now found that with the above disclosed temperature ranges and duration of the reaction an optimum compromise between the reaction rate and yield and costs involved in heating the yeast flow may be achieved.

The thermal treatment is preferably carried out in a separate container, which is connected to the purification reactor. In this reactor any other pre-treatment required to achieve an efficient purification process in the purification reactor, e.g. adjusting the pH, may be performed. To prevent that the organic loading of the sludge varies too much with time and to avoid overloading of the biomass in the purification reactor, the yeast stream is preferably mixed with a wastewater stream before being introduced in the purification reactor.

The thermal pre-treatment is of special importance in case the yeast stream is further purified in a reactor of the UASB type (Upflow Anaerobic Sludge blanket). In an UASB type reactor namely, influent wastewater is injected in a bottom region of the purification reactor, where a dense sludge bed and a less dense sludge blanket, comprising mainly granular sludge, are maintained. Care is taken to adapt and distribute the influent flow in the bottom region of the reactor in such a way as to avoid excess turbulence within the sludge phase. When contacted with the micro-organisms present in the sludge, biochemical decomposition of the organic compounds present in the influent takes place, which is associated with the release of biogas. As water is purified, it separates from the sludge blanket and flows towards the upper region of the reactor, from which it is removed through effluent launders. In the top region of the reactor a number of baffle plates are inclined with respect to the reactor wall. When contacting the baffle plates, solid particles will slide down the baffle plates and settle back in the sludge blanket, whereas biogas bubbles are guided along the baffle plates towards a gas effluent pipe and purified water is separated off and removed.

By subjecting the yeast flow to a thermal pre-treatment, floating particles of relatively large dimensions such as for example yeast particles which otherwise would only be decomposed by the sludge at a low reaction rate and involve disintegration of the granular sludge, are now decomposed before being contacted with the sludge. Lysis of the yeast cells thus allows disintegration of the sludge to be minimised. Besides this, there is a risk that floating particles together with disintegrated sludge, which also starts floating, leave the reactor together with the purified water flow. This is undesirable and may be counteracted by subjecting the yeast flow to the above-disclosed thermal treatment as in that way the yeast particles are decomposed before being introduced into the reactor. Subjecting the yeast stream to a thermal pre-treatment process further involves that compounds present in the interior of the yeast cells are released in the influent water and may be assimilated in the sludge blanket. As the yeast stream is far more concentrated and contains a lot more biological material than a wastewater flow, in this way the reactor capacity and amount of biogas produced may be increased while the reactor volume remains unchanged. This is an important economical advantage.

To counteract turbulence and disintegration of the sludge particles as a consequence of this turbulence, care should be taken that the inlet for influent of waste water is constructed in such a way that a virtually even distribution of the influent over the entire surface of the reactor is provided.

The invention is further elucidated in the appending figure and description thereof.

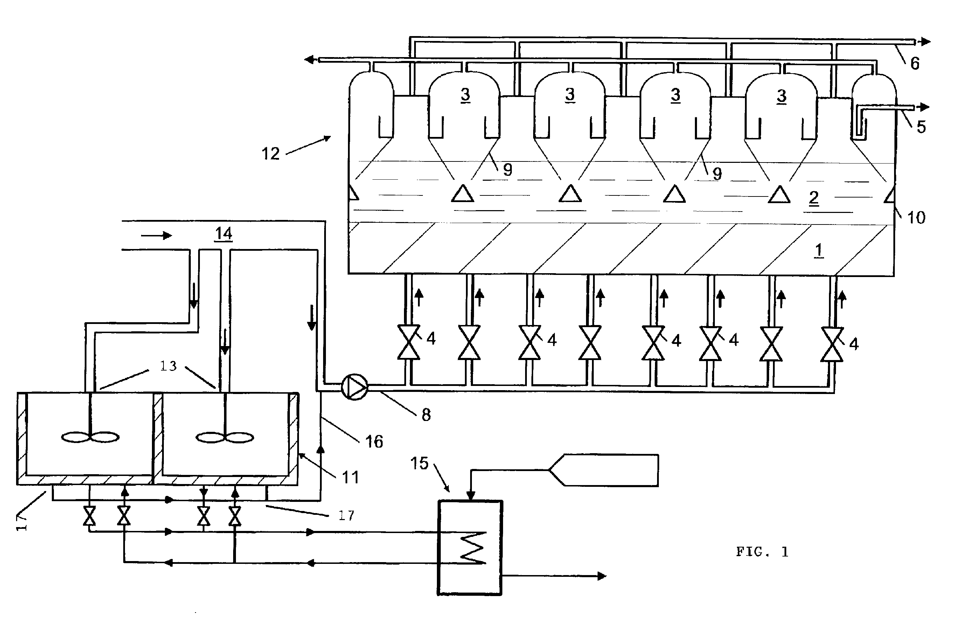

Figure 1 is a cross section of a typical UASB purification reactor used with the method of this invention.

As can be seen from figure 1, the device of this invention comprises a first reactor 11 for the thermal pre-treatment of the yeast and a second, purification reactor 12. The first reactor 11 comprises an inlet 13 for the yeast stream and a heating device for heating the contents of the reactor 11. The first reactor 11 comprises an outlet 17, which gives access to a waste water supply pipe 14 to the purification reactor 12. The mixing of the pre-treated yeast stream and wastewater is done to keep variations of the organic loading of the sludge within the desired limits.

The second purification reactor 12 comprises at least one inlet 4 for the influent waste water and yeast flow 8. To minimise turbulence and guarantee an optimum distribution of the influent over the reactor 12, a plurality of inlets 4 may be provided. The flow of the liquid is directed in upward direction of the reactor 12. In the bottom region of the reactor, a sludge bed 1 is present which is responsible for the anaerobic decomposition of the biodegradable material present in the waste water and yeast flow 8. On top of the sludge bed 1 a sludge blanket 2 with a lower sludge concentration is present.

On top of the reactor 12, a plurality of three phase separators 3 are mounted to allow that biogas, purified water and solids are separated from each other. Purified water is removed through effluent launders 5. Biogas is removed through the piping 6.

The three-phase separator comprises a plurality of baffle plates 9, which are inclined with respect to the reactor wall 10. The baffle plates 9 function as a guide for the biogas bubbles towards the biogas effluent pipe. The baffle plates 9 also assist in separating solid particles from the liquid phase, and constitute a sedimentation surface for the solid particles to guide them towards the bottom region of the reactor.

In the method of this invention, a yeast flow, which is a highly viscous fluid with yeast particles, is introduced into the first reactor 11 and subjected to a thermal treatment at a temperature of at least 40°C for at least 24 hours, preferably approximately 48 hours. If so desired the yeast flow may be mixed with a wastewater stream before being introduced into the reactor. The yeast stream is namely rather concentrated and mostly accounts for a few m³/day only, whereas other types of wastewater produced in a brewery may amount to 100-1000 m³/day or more as it may originate from various sources, e.g. rinsing of fusts, malthouse water and water originating from a bottling plant. As a consequence of this pre-treatment, the yeast cells are subjected to lysing and their contents are released into the liquid water based medium. The thus pre-treated yeast flow leaves the reactor 11 through the outlet 13 and is preferably mixed into the wastewater flow 14 before being fed to the purification reactor 12. In that way care is taken that the liquid flow that is fed to the purification reactor has a virtually homogenous composition. It is however also possible to immediately introduce the yeast flow into the reactor 1.

In the reactor 1, the organic material present in the mixed waste water and yeast flow, is contacted with the sludge and decomposed by the micro-organisms present in it in anaerobic conditions. This decomposition is accompanied by the production of biogas, which flows in upward direction of the reactor together with the purified water and floating particles that may be present in the reactor. The gas is directed towards the biogas outlet by the baffle plates 9. The baffle plates assist in the sedimentation towards the sludge blanket of floating particles. The purified water is removed through the effluent gutter 5.

## Claims

1. A method for processing a water based yeast containing waste stream, **characterised in that** the yeast containing waste stream is subjected to a thermal treatment for at least 24 hours at a temperature of at least 40°C, after which the stream is purified in an anaerobic water purification reactor.

2. A method as claimed in claim 1, **characterised in that** the thermal treatment is subjected to a temperature within the range of 45-60°C for 36-60 hours.

3. A method as claimed in claim 1 or 2, **characterised in that** before being introduced into the water purification reactor, the thermally treated yeast stream is mixed with a wastewater stream.

4. A method as claimed in any one of claims 1-3, **characterised in that** the waste stream is injected in a lower region of the reactor and distributed homogeneously over this lower region.
